# EUROPEAN PATENT APPLICATION

(11) **EP 4 608 009 A1**
(43) Date of publication of application: **27.08.2025**
(21) Application number: 23893278.4
(22) Date of filing: 14.08.2023
(51) Int. Cl.: H04W 36/00

(54) **CELL ACCESS METHOD AND ELECTRONIC DEVICE**

(30) Priority: 22.11.2022 CN 202211474183
(71) Applicant: Honor Device Co., Ltd., Shenzhen, Guangdong 518040 (CN)
(72) Inventor: LI, Haibo, Shenzhen, Guangdong 518040 (CN); XUE, Chao, Shenzhen, Guangdong 518040 (CN)
(74) Representative: Isarpatent
(86) International application number: PCT/CN2023/112801
(87) International publication number: WO 2024/109179

(57) **Abstract**

Embodiments of this application provide a cell accessing method and an electronic device, and relate to the field of electronic devices, to optimize a process in which an electronic device such as a mobile phone accesses a cell. A specific solution is: receiving redirection indication information from a first access network device, where the redirection indication information includes a first frequency and a first standard, and the first frequency belongs to the first standard; and the first access network device is an access network device currently connected to the electronic device; measuring, based on the redirection indication information, signal quality of a first cell corresponding to the first frequency; in a case in which the signal quality of the first cell corresponding to the first frequency is less than a first signal quality threshold, measuring signal quality of a second cell corresponding to a second frequency, where the second frequency belongs to the first standard, and the second frequency is different from the first frequency; and accessing a target cell in a case in which a cell with signal quality greater than or equal to a second signal quality threshold exists in the second cell, where the first signal quality threshold is less than or equal to the second signal quality threshold.

## Description

This application claims priority to Chinese Patent Application No. 202211474183.1, filed with the China National Intellectual Property Administration on November 22, 2022 and entitled "CELL ACCESSING METHOD AND ELECTRONIC DEVICE", which is incorporated herein by reference in its entirety.

### TECHNICAL FIELD

This application relates to the field of electronic devices, and in particular, to a cell accessing method and an electronic device.

### BACKGROUND

Currently, to ensure call quality of an electronic device such as a mobile phone, in a case in which signal quality of a cell currently accessed by the mobile phone is poor, the mobile phone receives an indication message of a network, accesses a cell corresponding to a frequency based on the frequency indicated by the indication message of the network, and makes a call through the cell.

### SUMMARY

Embodiments of this application provide a cell accessing method and an electronic device, to optimize a process in which an electronic device such as a mobile phone accesses a cell.

In some scenarios, when an electronic device such as a mobile phone is located indoors, coverage of a cell corresponding to a macro base station accessed by the mobile phone is weak, and the coverage is usually enhanced by adding an indoor distributed base station. In this way, when signal quality of the cell corresponding to the macro base station accessed by the mobile phone is poor, the mobile phone can re-access an indoor distributed cell corresponding to the indoor distributed base station, to ensure call quality of the mobile phone.

In some scenarios, when an electronic device such as a mobile phone makes a call, if signal quality of a cell corresponding to a macro base station currently accessed by the mobile phone is poor, the macro base station sends redirection indication information to the mobile phone. The redirection indication information includes a frequency corresponding to a cell that the mobile phone can access, so that the mobile phone accesses another cell. However, the macro base station currently accessed by the mobile phone may not know existence of an indoor distributed cell, and the redirection indication information sent by the macro base station currently accessed by the mobile phone to the mobile phone does not include a frequency corresponding to the indoor distributed cell. Therefore, even if the indoor distributed cell with good signal quality exists, the mobile phone cannot access the indoor distributed cell, and the mobile phone can access only a cell corresponding to a frequency included in the redirection indication information of the macro base station. When signal quality of the cell corresponding to the frequency included in the redirection indication information is poor, call quality of the mobile phone cannot be ensured.

According to a first aspect, an embodiment of this application provides a cell accessing method, applied to an electronic device. The cell accessing method may include: receiving redirection indication information from a first access network device, where the redirection indication information includes a first frequency and a first standard, and the first frequency belongs to the first standard; and the first access network device is an access network device currently connected to the electronic device; measuring, based on the redirection indication information, signal quality of a first cell corresponding to the first frequency; in a case in which the signal quality of the first cell corresponding to the first frequency is less than a first signal quality threshold, measuring signal quality of a second cell corresponding to a second frequency, where the second frequency belongs to the first standard, and the second frequency is different from the first frequency; and accessing a target cell in a case in which a cell with signal quality greater than or equal to a second signal quality threshold exists in the second cell, where the target cell is a cell with signal quality greater than the second signal quality threshold in the second cell, where the first signal quality threshold is less than or equal to the second signal quality threshold.

Based on the cell accessing method according to the first aspect, when the electronic device receives the redirection indication information sent by the access network device, the electronic device first determines the signal quality of the first cell corresponding to the first frequency included in the redirection indication information. When the signal quality of the first cell corresponding to the first frequency included in the redirection indication information is poor, the electronic device may determine signal quality of a cell corresponding to another frequency. When the signal quality of the cell corresponding to the another frequency is good, the electronic device may access the another cell with the good signal quality, so that the electronic device can access the cell with the good signal quality when the electronic device is redirected to the another cell. Therefore, a problem of a call lag or a call abnormality in a call between the electronic device and another electronic device can be avoided, thereby ensuring call quality of the electronic device.

With reference to the first aspect, in a possible implementation, the cell accessing method may further include: receiving measurement indication information from the first access network device, where the measurement indication information includes a third frequency; measuring, based on the measurement indication information, signal quality of a third cell corresponding to the third frequency; and storing signal quality information of a cell with signal quality greater than a third signal quality threshold in the third cell corresponding to the third frequency, where the second cell includes a cell with signal quality greater than the third signal quality threshold in the third cell corresponding to the third frequency.

Based on this possible implementation, when receiving the measurement indication information sent by the access network device, the electronic device may perform measurement on a cell corresponding to a frequency included in the measurement indication information, and store a cell with good signal quality. In this way, when the electronic device receives the redirection indication information sent by the access network device, and the signal quality of the first cell corresponding to the first frequency included in the redirection indication information is poor, the electronic device can determine a suitable cell for access from the stored cell with the good signal quality, so that the electronic device can access the cell with the good signal quality in time. Therefore, a problem of a call lag or a call abnormality in a call between the electronic device and another electronic device can be avoided, thereby ensuring call quality of the electronic device.

With reference to the first aspect, in a possible implementation, the second cell may include at least one of the following: a fourth cell, where the fourth cell is a cell with signal quality greater than the third signal quality threshold in the third cell corresponding to the third frequency; or a neighboring cell of a cell currently accessed by the electronic device, where the neighboring cell of the cell currently accessed by the electronic device may include at least one of a cell within coverage of the first access network device or a cell within coverage of a second access network device, and network standards of the second access network device and the first access network device are different; or a neighboring cell of the first cell; or a cell historically accessed by the electronic device at a current location.

Based on this possible implementation, when the electronic device receives the redirection indication information sent by the access network device, and the signal quality of the first cell corresponding to the first frequency included in the redirection indication information is poor, the electronic device may determine a suitable cell for access from a stored cell with good signal quality, the neighboring cell of the currently accessed cell, the neighboring cell of the first cell, and the cell historically accessed by the electronic device at the current location, so that the electronic device can access the cell with the good signal quality in time. Therefore, a problem of a call lag or a call abnormality in a call between the electronic device and another electronic device can be avoided, thereby ensuring call quality of the electronic device.

With reference to the first aspect, in a possible implementation, the first access network device may be a new radio NR base station, and the second access network device is a long term evolution LTE base station.

With reference to the first aspect, in a possible implementation, the first access network device is a new radio NR base station, and the first standard is a long term evolution LTE standard.

Based on this possible implementation, when the electronic device receives the redirection indication information sent by the access network device, the signal quality of the first cell corresponding to the first frequency included in the redirection indication information is poor, and the access network device currently accessed by the electronic device is the NR base station, the electronic device may determine a suitable cell for access from LTE neighboring cells of a currently accessed NR cell, so that the electronic device can access a cell with good signal quality in time. Therefore, a problem of a call lag or a call abnormality in a call between the electronic device and another electronic device can be avoided, thereby ensuring call quality of the electronic device.

With reference to the first aspect, in a possible implementation, the measuring signal quality of a second cell may include: sequentially measuring the signal quality of the second cell based on measurement priorities of the second cell in a case in which the second cell includes at least two of the fourth cell, the neighboring cell of the cell currently accessed by the electronic device, the neighboring cell of the first cell, or the historically accessed cell, where a measurement priority of the fourth cell is higher than a measurement priority of the neighboring cell of the cell currently accessed by the electronic device, the measurement priority of the neighboring cell of the cell currently accessed by the electronic device is higher than a measurement priority of the neighboring cell of the first cell, and the measurement priority of the neighboring cell of the first cell is higher than a measurement priority of the historically accessed cell.

Based on this possible implementation, when the electronic device receives the redirection indication information sent by the access network device, the signal quality of the first cell corresponding to the first frequency included in the redirection indication information is poor, and the second cell includes a plurality of cells, the electronic device may measure the signal quality of the second cell based on the measurement priorities of the second cell, so that the electronic device can access a cell with good signal quality in time. Therefore, a problem of a call lag or a call abnormality in a call between the electronic device and another electronic device can be avoided, thereby ensuring call quality of the electronic device.

With reference to the first aspect, in a possible implementation, the second frequency may include at least one of the following: a frequency corresponding to the fourth cell; or a frequency corresponding to the neighboring cell of the cell currently accessed by the electronic device; or a frequency corresponding to a neighboring cell of the first cell; or a frequency corresponding to the cell historically accessed by the electronic device at the current location.

With reference to the first aspect, in a possible implementation, the measuring signal quality of a second cell includes: sequentially measuring the signal quality of the second cell based on measurement priorities of the second frequency in a case in which the second frequency includes at least two of the frequency corresponding to the fourth cell, the frequency corresponding to the neighboring cell of the cell currently accessed by the electronic device, the frequency corresponding to the neighboring cell of the first cell, and the frequency corresponding to the cell historically accessed by the electronic device at the current location, where a measurement priority of the frequency corresponding to the fourth cell is higher than a measurement priority of the frequency corresponding to the neighboring cell of the cell currently accessed by the electronic device, the measurement priority of the frequency corresponding to the neighboring cell of the cell currently accessed by the electronic device is higher than a measurement priority of the frequency corresponding to the neighboring cell of the first cell, and the measurement priority of the frequency corresponding to the neighboring cell of the first cell is higher than a measurement priority of the frequency corresponding to the historically accessed cell.

With reference to the first aspect, in a possible implementation, before the measuring signal quality of a second cell corresponding to a second frequency, the cell accessing method may further include: starting a timer, where timing duration of the timer is preset duration; and the measuring signal quality of a second cell corresponding to a second frequency includes: measuring the signal quality of the second cell corresponding to the second frequency within the preset duration.

Based on this possible implementation, when the electronic device receives the redirection indication information sent by the access network device, and the signal quality of the first cell corresponding to the first frequency included in the redirection indication information is poor, the electronic device may measure the signal quality of the second cell within the preset duration, so that it can be ensured that the electronic device can access a cell with good signal quality in time. Therefore, a problem of a call lag or a call abnormality in a call between the electronic device and another electronic device can be avoided, thereby ensuring call quality of the electronic device.

With reference to the first aspect, in a possible implementation, in a case in which a plurality of cells with signal quality greater than the second signal quality threshold exist in the second cell, the target cell is a cell with best signal quality in the plurality of cells.

Based on this possible implementation, when the electronic device receives the redirection indication information sent by the access network device, the signal quality of the first cell corresponding to the first frequency included in the redirection indication information is poor, and the electronic device measures the signal quality of the plurality of cells within the preset duration and the signal quality is good, the electronic device may access the cell with the best signal quality, so that it can be ensured that the electronic device can access the cell with the good signal quality in time. Therefore, a problem of a call lag or a call abnormality in a call between the electronic device and another electronic device can be avoided, thereby ensuring call quality of the electronic device.

With reference to the first aspect, in a possible implementation, the cell accessing method may further include: accessing the first cell in a case in which the signal quality of the second cell is less than the second signal quality threshold.

Based on this possible implementation, when the electronic device receives the redirection indication information sent by the access network device, the signal quality of the first cell corresponding to the first frequency included in the redirection indication information is poor, and the electronic device determines that signal quality of all cells corresponding to another frequency is poor, the electronic device may access the first cell corresponding to the first frequency, so that the electronic device can re-access the cell in time when the electronic device is redirected to another cell. Therefore, a problem of a call lag or a call abnormality in a call between the electronic device and another electronic device can be avoided, thereby ensuring call quality of the electronic device.

With reference to the first aspect, in a possible implementation, the preset duration may be 2 seconds or 3 seconds.

Based on this possible implementation, when the electronic device receives the redirection indication information sent by the access network device, and the signal quality of the first cell corresponding to the first frequency included in the redirection indication information is poor, the electronic device may determine signal quality of a cell corresponding to another frequency within short preset duration, so that the electronic device can re-access the cell in time when the electronic device is redirected to another cell. Therefore, a problem of a call lag or a call abnormality in a call between the electronic device and another electronic device can be avoided, thereby ensuring call quality of the electronic device.

According to a second aspect, an embodiment of this application provides a cell accessing apparatus. The apparatus may be used in an electronic device, and configured to implement the method in the first aspect. A function of the apparatus may be implemented by hardware or by hardware executing corresponding software. The hardware or the software includes one or more modules corresponding to the function, for example, a receiving module, a measurement module, an accessing module, and the like.

The receiving module may be configured to receive redirection indication information from a first access network device, where the redirection indication information includes a first frequency and a first standard, and the first frequency belongs to the first standard; and the first access network device is an access network device currently connected to the electronic device.

The measurement module may be configured to measure, based on the redirection indication information, signal quality of a first cell corresponding to the first frequency.

The measurement module may be further configured to measure, in a case in which the signal quality of the first cell corresponding to the first frequency is less than a first signal quality threshold, signal quality of a second cell corresponding to a second frequency, where the second frequency belongs to the first standard, and the second frequency is different from the first frequency.

The accessing module may be configured to access a target cell in a case in which a cell with signal quality greater than or equal to a second signal quality threshold exists in the second cell, where the target cell is a cell with signal quality greater than the second signal quality threshold in the second cell; and the first signal quality threshold is less than or equal to the second signal quality threshold.

With reference to the second aspect, in another possible implementation, the receiving module may be further configured to receive measurement indication information from the first access network device, where the measurement indication information includes a third frequency.

The measurement module may be further configured to measure, based on the measurement indication information, signal quality of a third cell corresponding to the third frequency.

The cell accessing apparatus may further include a storage module.

The storage module may be configured to store signal quality information of a cell with signal quality greater than a third signal quality threshold in the third cell corresponding to the third frequency, where the second cell includes a cell with signal quality greater than the third signal quality threshold in the third cell corresponding to the third frequency.

With reference to the second aspect, in another possible implementation, the second cell includes at least one of the following: a fourth cell, where the fourth cell is a cell with signal quality greater than the third signal quality threshold in the third cell corresponding to the third frequency; a neighboring cell of a cell currently accessed by the electronic device, where the neighboring cell of the cell currently accessed by the electronic device may include at least one of a cell within coverage of the first access network device or a cell within coverage of a second access network device, and network standards of the second access network device and the first access network device are different; a neighboring cell of the first cell; and a cell historically accessed by the electronic device at a current location.

With reference to the second aspect, in another possible implementation, the first access network device is a new radio NR base station, and the second access network device is a long term evolution LTE base station.

With reference to the second aspect, in another possible implementation, the measurement module may be specifically configured to: sequentially measure the signal quality of the second cell based on measurement priorities of the second cell in a case in which the second cell includes at least two of the fourth cell, the neighboring cell of the cell currently accessed by the electronic device, the neighboring cell of the first cell, or the historically accessed cell, where a measurement priority of the fourth cell is higher than a measurement priority of the neighboring cell of the cell currently accessed by the electronic device, the measurement priority of the neighboring cell of the cell currently accessed by the electronic device is higher than a measurement priority of the neighboring cell of the first cell, and the measurement priority of the neighboring cell of the first cell is higher than a measurement priority of the historically accessed cell.

With reference to the second aspect, in another possible implementation, the cell accessing apparatus may further include a starting module.

The start module may be configured to start a timer, where timing duration of the timer is preset duration.

The measurement module may be specifically configured to measure the signal quality of the second cell corresponding to the second frequency within the preset duration.

With reference to the second aspect, in another possible implementation, in a case in which a plurality of cells with signal quality greater than the second signal quality threshold exist in the second cell, the target cell is a cell with best signal quality in the plurality of cells.

With reference to the second aspect, in another possible implementation, the accessing module may be further configured to access the first cell in a case in which the signal quality of the second cell is less than the second signal quality threshold.

With reference to the second aspect, in another possible implementation, the preset duration is 2 seconds or 3 seconds.

According to a third aspect, a cell accessing device is provided. The cell accessing device has a function of implementing the method according to the first aspect. The function may be implemented by hardware, or may be implemented by hardware by executing corresponding software. The hardware or the software includes one or more modules corresponding to the function.

According to a fourth aspect, a cell accessing device is provided, including: a processor and a memory. The memory is configured to store computer-executable instructions. When the cell accessing device runs, the processor executes the computer-executable instructions stored in the memory, to cause the cell accessing device to perform the cell accessing method according to any one of the first aspect.

According to a fifth aspect, a cell accessing device is provided, including: a processor. The processor is configured to: after being coupled to a memory and reading instructions in the memory, perform, based on the instructions, the cell accessing method according to any one of the first aspect.

According to a sixth aspect, an embodiment of this application provides a computer-readable storage medium, where the computer-readable storage medium stores computer program instructions. When the computer program instructions are executed by an electronic device, the electronic device is caused to implement the cell accessing method according to any one of the first aspect or the possible implementations of the first aspect.

According to a seventh aspect, an embodiment of this application provides a computer program product. The computer program product includes computer-readable code. When the computer-readable code is run in an electronic device, the electronic device is caused to implement the cell accessing method according to any one of the first aspect or the possible implementations of the first aspect.

According to an eighth aspect, an apparatus (where, for example, the apparatus may be a chip system) is provided. The apparatus may include a processor, configured to support an electronic device in implementing the function in the first aspect. In a possible design, the apparatus further includes a memory. The memory is configured to store program instructions and data necessary to the electronic device. The apparatus, when being a chip system, may include a chip, or may include a chip and another discrete component.

It should be understood that, for beneficial effects of the second aspect to the eighth aspect, reference may be made to the related descriptions in the first aspect, and details are not described herein again.

### BRIEF DESCRIPTION OF DRAWINGS

FIG. 1 is a schematic flowchart 1 of a cell accessing method according to an embodiment of this application;
FIG. 2 is a schematic flowchart 2 of a cell accessing method provided in a conventional technology;
FIG. 3A is a schematic flowchart 1 of a cell accessing method according to an embodiment of this application;
FIG. 3B is a schematic diagram of a hardware structure of an electronic device according to an embodiment of this application;
FIG. 4 is a schematic flowchart 2 of a cell accessing method according to an embodiment of this application; and
FIG. 5 is a schematic diagram of a structure of a cell accessing apparatus according to an embodiment of this application.

### DESCRIPTION OF EMBODIMENTS

The technical solutions in embodiments of this application are clearly and completely described in the following with reference to the accompanying drawings in embodiments of this application. Clearly, the described embodiments are merely a part rather than all of embodiments of this application. All other embodiments obtained by a person of ordinary skill in the art based on embodiments of this application without creative efforts shall fall within the protection scope of this application.

Terms "first" and "second" are merely used for description purposes, and shall not be understood as indicating or implying relative importance or implicitly indicating a quantity of indicated technical features. Therefore, a feature defined with "first" or "second" may explicitly or implicitly include one or more features. In the descriptions of this application, unless otherwise stated, "a plurality of" means two or more.

Currently, to ensure call quality of an electronic device such as a mobile phone, in a case in which signal quality of a cell currently accessed by the mobile phone is poor, the mobile phone accesses another cell and makes a call through the cell re-accessed by the mobile phone. The electronic device may also be referred to as a user equipment (user equipment, UE).

For example, when a user equipment such as a mobile phone is located indoors, coverage of a cell corresponding to a macro base station accessed by the mobile phone is weak. In other words, signal quality of the cell corresponding to the macro base station is poor. Generally, coverage is enhanced by adding an indoor distributed base station, that is, when the signal quality of the cell corresponding to the macro base station accessed by the mobile phone is poor, the mobile phone may re-access an indoor distributed cell corresponding to an indoor distributed base station, to ensure call quality of the mobile phone.

The macro base station is a device configured for communication of a cellular mobile phone, and is a base station established at the early stage of network building of the cellular mobile phone. A coverage radius of a cell corresponding to the macro base station is large. For example, the macro base station may be a base station of a long-term-evolution (long-term-evolution, LTE) wireless communication system, or may be a base station of a 5th generation (5th generation, 5G) mobile communication system such as new radio (new radio, NR).

The indoor distributed base station is a base station corresponding to an indoor distribution system. The indoor distributed system can improve a mobile communication environment in a building. The indoor distribution system may evenly distribute a signal of a mobile communication base station to each indoor corner by using various indoor antennas, to ensure ideal signal coverage in an indoor area. The indoor distributed cell is a cell corresponding to the indoor distributed base station. The indoor distributed base station may be an indoor distributed base station of a long-term-evolution (long-term-evolution, LTE) wireless communication system, or may be an indoor distributed base station of a 5th generation (5th generation, 5G) mobile communication system such as new radio (new radio, NR).

However, when the signal quality of the cell corresponding to the macro base station currently accessed by the mobile phone is poor, and the mobile phone re-accesses the indoor distributed cell corresponding to the indoor distributed base station, the macro base station currently accessed by the mobile phone usually does not know existence of the indoor distributed cell. For example, the macro base station does not know a location of the mobile phone, the macro base station cannot determine whether the indoor distributed cell is to be accessed or the cell corresponding to the macro base station continues to be accessed, and the macro base station cannot learn an indoor distributed cell corresponding to the location. For another example, the indoor distributed base station is usually established and added after the macro base station is established, the macro base station usually does not know a newly added indoor distributed base station, the macro base station does not know an indoor distributed cell corresponding to the newly added indoor distributed base station, and the macro base station does not add the newly added indoor distributed cell as a neighboring cell.

Therefore, when the mobile phone makes a call, if signal quality of a cell corresponding to a macro base station currently accessed by the mobile phone is poor, the mobile phone accesses another cell. The macro base station currently accessed by the mobile phone does not know existence of the indoor distributed cell. Therefore, even if an indoor distributed cell with good signal quality exists, the mobile phone cannot access the newly added indoor distributed cell, and the mobile phone can only access another macro base station. When signal quality of the another macro base station is poor, call quality of the mobile phone cannot be ensured.

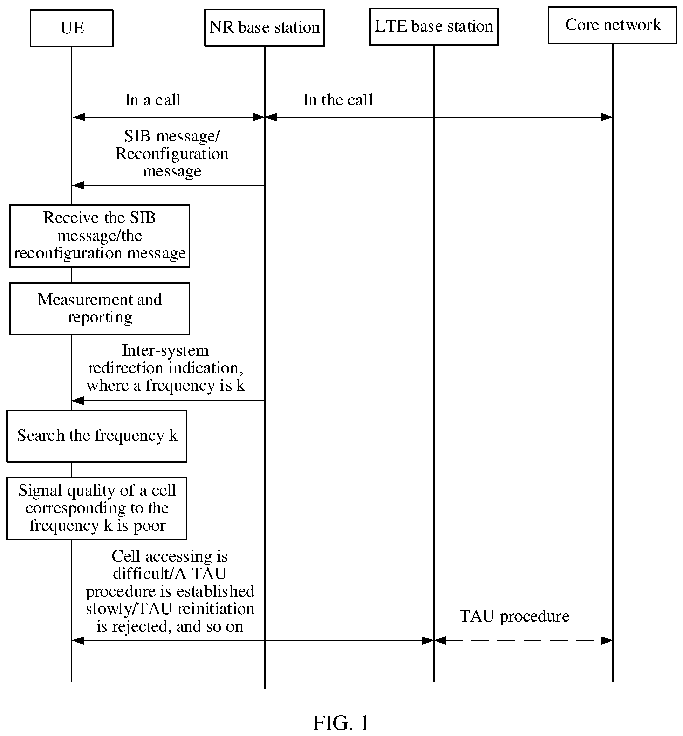

For example, as shown in FIG. 1, in a case in which the signal quality of the cell currently accessed by the mobile phone is poor, the mobile phone accesses another cell, and a process of making a call through the re-accessed cell includes the following steps:

When the UE (for example, the mobile phone) makes a call, the UE may be connected to a core network of an NR network through an NR base station (for example, an NR macro base station), so that the core network can be connected to another UE, and the UE can make a call to the another UE through the NR and the core network.

When the UE makes a call to the another UE through the NR and the core network, the NR may broadcast a measurement message such as a system information block (system information block, SIB) message or a reconfiguration message (namely, an RRC reconfiguration (Radio Resource Control Reconfiguration) message). The measurement message indicates the UE to perform measurement. The UE may receive the measurement message, that is, the SIB message or the reconfiguration message, broadcast by the NR. The measurement message may include a frequency of an NR standard corresponding to a cell that needs to be measured. The frequency of the NR standard corresponding to the cell that needs to be measured may include a frequency corresponding to the cell currently accessed by the UE.

After the UE receives the measurement message (that is, the SIB message or the reconfiguration message) broadcast by the NR, the UE may measure the frequency of the NR standard included in the measurement message, that is, measure signal quality of the cell corresponding to the frequency of the NR standard included in the measurement message.

After the UE measures the signal quality of the cell corresponding to the frequency of the NR standard included in the measurement message, the UE may report a measurement result to the NR. The measurement result may include the signal quality of the cell currently accessed by the UE.

When the NR receives the measurement result sent by the UE, and the signal quality of the cell currently accessed by the UE is poor, the NR may broadcast a measurement message (that is, a SIB message or a reconfiguration message) to the UE again. The measurement message broadcast again may include another frequency. The another frequency may be a frequency of the NR standard or a frequency of an LTE standard. A cell corresponding to the another frequency may be a cell of the macro base station, or may be an indoor distributed cell.

After the UE receives the measurement message broadcast again by the NR, the UE may measure the another frequency included in the measurement message, that is, measure signal quality of the cell corresponding to the another frequency included in the measurement message.

After the UE measures the signal quality of the cell corresponding to the another frequency included in the measurement message, the UE may report a measurement result to the NR. The measurement result includes signal quality of the cell corresponding to the another frequency.

When the NR receives the measurement result sent by the UE, the NR may determine, based on the measurement result, a frequency, for example, a frequency k, corresponding to a cell that the UE can re-access. The frequency k may be a frequency corresponding to an LTE macro base station.

When the NR determines the frequency corresponding to the cell re-accessed by the UE, and the frequency corresponding to the cell re-accessed by the UE is a frequency corresponding to the LTE, the NR may send an inter-system redirection indication to the UE. The inter-system redirection indication may include a system corresponding to the cell re-accessed by the UE (where the system is an LTE, and is different from an NR system corresponding to a cell previously accessed by the UE, and therefore, the redirection indication may be referred to as the inter-system redirection indication) and a frequency, namely, the frequency k.

After the UE receives the inter-system redirection indication sent by the NR, the UE may search the frequency k, to find one or more cells corresponding to the frequency k. After the UE finds the one or more cells corresponding to the frequency k, the UE may access a cell with a best signal in the one or more cells corresponding to the frequency k.

When signal quality of the one or more cells corresponding to the frequency k is good, after the UE accesses the cell with the best signal in the one or more cells corresponding to the frequency k, and after the UE accesses the cell corresponding to the frequency k, the LTE base station may be connected to a core network of an LTE network. For example, the LTE base station may perform a tracking area updating (tracking area updating, TAU) procedure with the core network of the LTE network, so that the LTE base station can establish a connection to another UE, to ensure call quality of the UE.

When the signal quality of the one or more cells corresponding to the frequency k is poor, it is difficult for the UE to access the cell corresponding to the frequency k, establishment of tracking area updating (tracking area updating, TAU) between the UE and the LTE is slow, reinitiation of the TAU is rejected, and so on, resulting in a call lag or a call abnormality between the UE and another UE.

It can be learned from the foregoing process that, when the NR (namely, the macro base station) currently accessed by the UE does not know existence of the indoor distributed cell, the measurement message broadcast by the NR does not include the indoor distributed cell, the UE does not measure the indoor distributed cell, and the inter-system redirection indication sent by the NR to the UE does not include a frequency corresponding to the indoor distributed cell. Consequently, even if the indoor distributed cell exists at a location of the UE, or signal quality of the indoor distributed cell corresponding to the location of the UE is good, the UE does not access the indoor distributed cell. As a result, a call lag or a call abnormality between the UE and another UE is caused, and the call quality of the UE cannot be ensured.

For example, the inter-system redirection indication sent by the NR to the UE may be:

```
          message c1:rrcRelease:
               {
               rrc-TransactionIdentifier 0,
               criticaiExtensions rrcRelease:
                   {
                   redirectedCarrierInfo eutra
                       {
                       eutraFrequency 1650
                       }
```

To be specific, the frequency corresponding to the re-accessed cell included in the inter-system redirection indication sent by the NR to the UE is 1650.

After the UE re-accesses the cell corresponding to the frequency of 1650, each cell corresponding to the location of the UE and signal quality corresponding to each cell may be obtained through measurement. Each cell corresponding to the location of the UE and the signal quality corresponding to each cell are shown in Table 1.

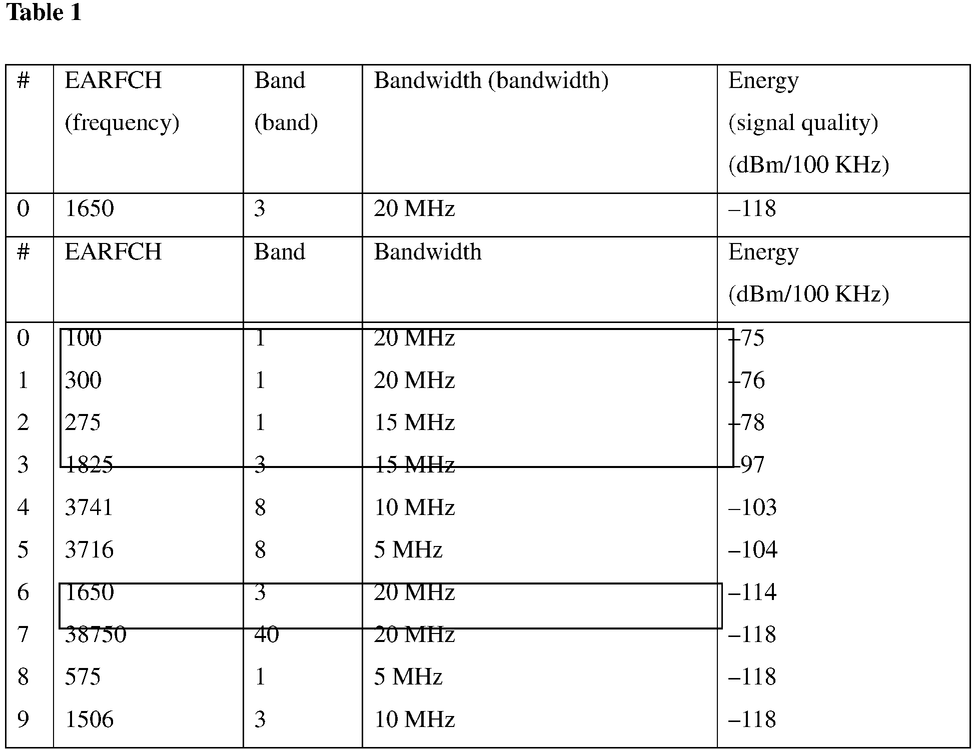

It can be seen from Table 1 that, after the UE re-accesses the cell corresponding to the frequency of 1650, the signal quality of the cell corresponding to the frequency of 1650 is -114, and the signal quality is poor. However, at the location of the UE, an indoor distributed cell with good signal quality exists, for example, a cell corresponding to a frequency of 100 (where signal quality is -75), a cell corresponding to a frequency of 300 (where signal quality is -76), or a cell corresponding to a frequency of 275 (where signal quality is -78), and the signal quality is better than the signal quality of the cell corresponding to the frequency of 1650. However, the frequency corresponding to the re-accessed cell included in the inter-system redirection indication sent by the NR to the UE is 1650. The UE can only re-access the cell corresponding to the frequency of 1650. The signal quality of the cell corresponding to the frequency of 1650 of the UE is poor, and the UE cannot access the cell corresponding to the good signal quality. Consequently, a call lag or a call abnormality is caused between the UE and another UE when the UE accesses the cell corresponding to the frequency of 1650, and the call quality of the UE cannot be ensured.

To ensure the call quality of the UE, in a related conventional technology, redirection information sent by a network side (for example, the macro base station) to the UE may carry an LTE frequency list and search time for allowing the UE to search an LTE frequency in the LTE frequency list. The UE searches for an LTE cell corresponding to the LTE frequency within the search time, and the UE camps on the found cell. That is, in a related technology, the search time is configured, and the UE searches for a suitable LTE cell in the LTE frequency list within the search time, and continues to search another LTE frequency if the suitable LTE cell is not found within the time. Long search time is configured, thereby increasing a probability that the UE finds the suitable LTE cell, so that a success rate of redirection is improved, and the call quality of the UE can be ensured.

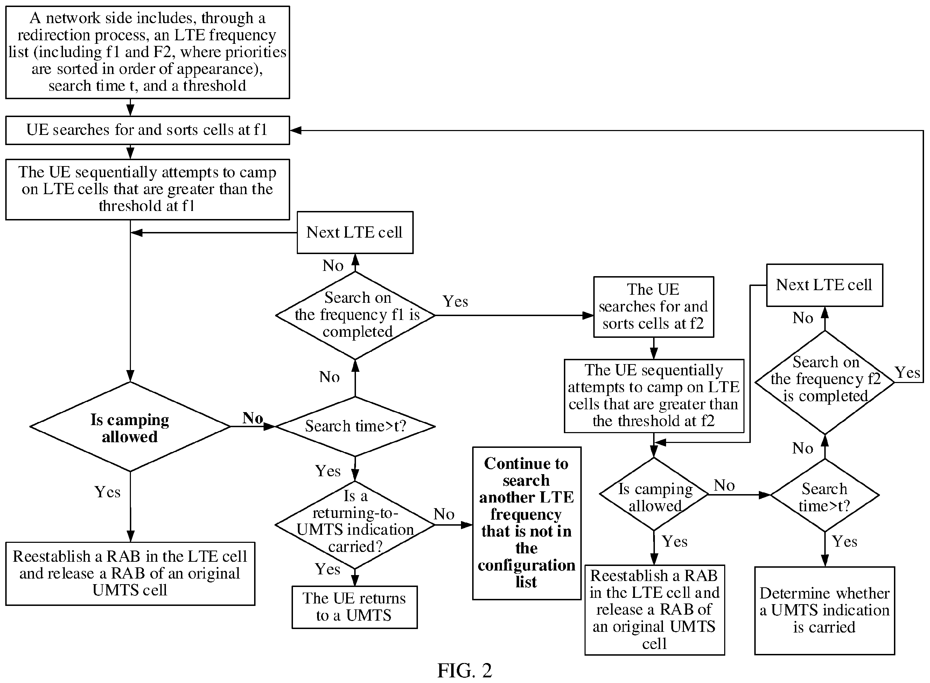

For example, as shown in FIG. 2, a process of the related conventional technology includes the following steps:
A network side includes an LTE frequency list (including f1 and F2, where priorities are sorted in order of appearance), search time t, and a threshold in a redirection process. The UE searches for and sorts cells at f1. The UE sequentially attempts to camp on LTE cells that are greater than the threshold at f1.

When the UE determines that the UE can camp on an LTE cell that is greater than the threshold at f1, the UE may reestablish a radio access bearer (radio access bearer, RAB) in the LTE cell and release a RAB of an original universal mobile telecommunications system (universal mobile telecommunications system, UMTS) cell.

When the UE determines that the UE cannot camp on an LTE cell that is greater than the threshold at f1, the UE may determine whether the search time is greater than t. When the search time is greater than t, the UE may determine whether the network side includes returning-to-UMTS indication information. When the returning-to-UMTS indication information is included, the UE may return to a UMTS. When the returning-to-UMTS indication information is not included, the UE may continue to search an LTE frequency in the configuration list.

When the search time is less than t, the UE may determine whether the frequency f1 is searched completely. When the frequency f1 is not searched completely, the UE may continue to search for a next LTE cell at the frequency f1. When the frequency f1 is searched completely, the UE may search for and sort cells at f2. The UE sequentially attempts to camp on LTE cells that are greater than the threshold at f2.

When the UE determines that the UE can camp on an LTE cell that is greater than the threshold at f2, the UE may reestablish a RAB in the LTE cell and release a RAB of an original UMTS cell.

When the UE determines that the UE cannot camp on an LTE cell that is greater than the threshold at f2, the UE may determine whether the search time is greater than t. When the search time is greater than t, based on the returning-to-UMTS indication information configured by the network side, if the returning-to-UMTS indication information is 1, the UE may return to a UMTS. When the returning-to-UMTS indication information is 0, the UE may continue to search another LTE frequency that is not in the configuration list.

When the search time is less than t, the UE may determine whether the frequency f2 is searched completely. When the frequency f2 is not searched completely, the UE may continue to search for a next LTE cell at the frequency f2. When the frequency f2 is searched completely, the UE may continue to search for and sort cells at f1.

It can be seen that, in a related technology, although the UE may search for a cell corresponding to a frequency that is included in the redirection process and sent by the network side, if a suitable cell cannot be found, the UE may search for a cell corresponding to another frequency, to improve a success rate of redirection.

However, in the related technology, the UE searches another frequency only after receiving an explicit indication of the network side (that is, a returning-to-UMTS indication information configured by the network side is 0). If the UE does not receive the indication of the network side, the UE cannot search another frequency, resulting in that the UE cannot access a cell corresponding to the another frequency, or when the UE receives the indication of the network side late, the UE searches another frequency late, resulting in that the UE cannot access a cell corresponding to the another frequency in time. Consequently, a problem of a call lag or a call abnormality in a call between the UE and another UE is caused. Therefore, a problem of a call lag or a call abnormality between a UE and another UE is not resolved well in the related technology, and call quality of the UE cannot be ensured.

For the foregoing problem, an embodiment of this application provides a cell accessing method, applied to an electronic device. When the electronic device makes a call through a currently accessed cell, if signal quality of the currently accessed cell is poor, a network side device (for example, the foregoing macro base station) sends a redirection indication to the electronic device, where redirection indication information includes a frequency. When the electronic device determines that signal quality of a cell corresponding to the frequency included in the redirection indication information is poor, the electronic device may start a timer, and search for a cell corresponding to another frequency within search time corresponding to the timer. When signal quality of the cell corresponding to the another frequency is good, the electronic device may access the cell with the good signal quality. Therefore, a problem of a call lag or a call abnormality in a call between the electronic device and another electronic device can be avoided, thereby ensuring call quality of the electronic device.

In comparison with the foregoing related technology, in the solution of this application, when the electronic device determines that the signal quality of the cell corresponding to the frequency included in the redirection indication information is poor, the electronic device searches for a cell corresponding to another frequency. The electronic device does not need to search for the cell corresponding to the another frequency when receiving an indication from the network side device, so that the electronic device can search for the cell corresponding to the another frequency in time, avoiding a case in which the electronic device cannot access the cell corresponding to the another frequency in time.

In addition, in the solution of this application, the search time is determined by the electronic device. The search time is time used for searching another frequency. In addition, when the signal quality of the cell corresponding to the frequency included in the redirection indication information is poor, the electronic device searches for a cell corresponding to another frequency within the search time, to ensure that the cell corresponding to the another frequency can be found within the search time. However, in the foregoing related technology, the search time is determined by the network side, and the search time is time for searching for a cell corresponding to a frequency indicated by the network side. In the related technology, search time for searching for a cell corresponding to another frequency is not provided, and it cannot be ensured that the cell corresponding to the another frequency is found within the search time. The search time is 10 seconds, and is long. As a result, the electronic device searches for the cell corresponding to the frequency indicated by the network side for long time. When signal quality of the cell corresponding to the frequency indicated by the network side is poor, the UE cannot search for a cell corresponding to another frequency. Consequently, a call lag or a call abnormality in a call between the electronic device and another electronic device is caused, and the call quality of the electronic device cannot be ensured.

In addition, an application scenario of the foregoing related technology is redirection from a 3rd generation (3th generation, 3G) mobile communication system to a 4th generation (4th generation, 4G) mobile communication system. An application scenario of the solution in this application may be a scenario in which call experience may be poor after redirection from a 5G cell to a 4G cell in a call process of an electronic device.

The following describes a cell accessing method according to an embodiment of this application.

The cell accessing method according to this embodiment of this application is applicable to an electronic device, which may also be referred to as a user equipment UE. In some embodiments, the electronic device may be an electronic device having an NFC function such as a mobile phone, a tablet computer, a handheld computer, a personal computer (personal computer, PC), a cellular phone, a personal digital assistant (personal digital assistant, PDA), or a wearable device. A specific form of the electronic device is not limited in embodiments of this application.

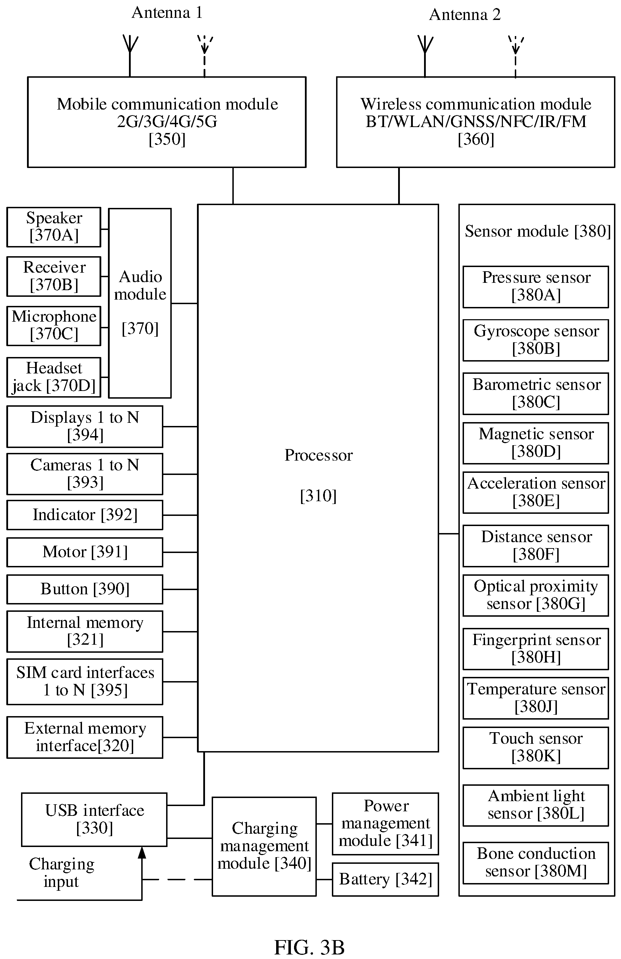

For example, the electronic device is the mobile phone. FIG. 3B is a schematic diagram of a structure of an electronic device according to an embodiment of this application.

As shown in FIG. 3B, the electronic device may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like. The sensor module 380 may include a pressure sensor 380A, a gyroscope sensor 380B, a barometric sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, and a bone conduction sensor 380M.

It may be understood that, a structure illustrated in this embodiment does not constitute a specific limitation on the electronic device. In some other embodiments, the electronic device may include more or fewer components than those shown in the figure, or some components may be combined, or some components may be split, or a different component arrangement may be used. The components in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

Certainly, it may be understood that FIG. 3B only shows an exemplary description when the electronic device is in a form of a mobile phone. When the electronic device is in a form of another device such as a tablet computer, a handheld computer, a PC, a PDA, or a wearable device (for example, a smart watch or a smart bracelet), a structure of the electronic device may include fewer structures than those shown in FIG. 3B, or more structures than those shown in FIG. 3B, and is not limited herein.

The method in the following embodiment may be implemented in an electronic device having the foregoing hardware structure.

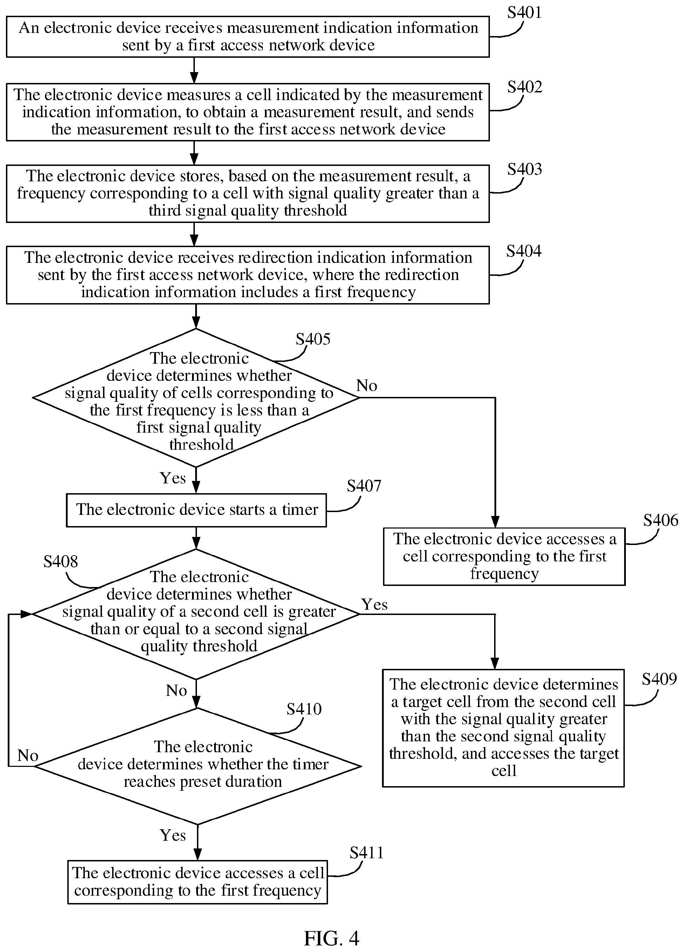

FIG. 4 is a schematic flowchart of a cell accessing method according to an embodiment of this application. As shown in FIG. 4, the cell accessing method may include the following S401 to S411.

S401: An electronic device receives measurement indication information sent by a first access network device.

When the electronic device (for example, a user equipment, UE) makes a call to another electronic device (for example, a user equipment, UE), the electronic device may access a cell corresponding to the first access network device. After the electronic device accesses the cell corresponding to the first access network device, the electronic device may make a call to another electronic device through the first access network device. In other words, the first access network device is an access network device currently connected to the electronic device.

In some examples, the first access network device may be a macro base station (namely, a macro base station). For example, the first access network device may be an NR macro base station, or the first access network device may be an LTE macro base station. A specific type of the first access network device is not limited in this embodiment of this application. In this embodiment of this application, an example in which the first access network device currently accessed by the electronic device is the NR macro base station is used for description.

After the electronic device accesses the cell corresponding to the first access network device, before or during a call between the electronic device and another electronic device, the first access network device may send the measurement indication information. The measurement indication information may indicate the electronic device to measure a cell that needs to be measured, for example, measure signal quality of the cell that needs to be measured.

In some examples, the measurement indication information may include a frequency (which may be referred to as a third frequency in this embodiment of this application) that needs to be measured. That is, after receiving the measurement indication information, the electronic device may search the frequency that needs to be measured and that is included in the measurement indication information, to find the cell that needs to be measured and measure the signal quality of the cell that needs to be measured.

It should be noted that that the first access network device sends the measurement indication information may be that the first access network device broadcasts the measurement indication information every preset time, so that the electronic device can receive the measurement indication information broadcast by the first access network device.

The signal quality of the cell may include energy Energy, a signal to interference plus noise ratio (signal to interference plus noise ratio, SINR), a reference signal received power (reference signal receiving oower, RSRP), a carrier received signal strength (received signal strength indication, RSSI), reference signal received quality (reference signal receiving quality, RSRQ), and the like of the cell. A specific type of the signal quality of the cell is not limited in this embodiment of this application.

The cell that needs to be measured may include the cell corresponding to the first access network device accessed by the electronic device (that is, the cell currently accessed by the electronic device), and the cell that needs to be measured may also include another cell corresponding to the first access network device (for example, a neighboring cell of the cell currently accessed by the electronic device). The cell currently accessed by the electronic device may be a cell corresponding to an NR base station, or may be a cell corresponding to an LTE base station. The neighboring cell of the cell currently accessed by the electronic device may be a cell corresponding to the NR base station, or may be a cell corresponding to the LTE base station. This is not limited in this embodiment of this application.

In some examples, the measurement indication information may include an identifier of the cell that needs to be measured, so that the electronic device can measure the cell that needs to be measured based on the identifier of the cell that needs to be measured. For example, the electronic device may measure the signal quality of the cell that needs to be measured based on the identifier of the cell that needs to be measured.

In some examples, the measurement indication information may include a frequency corresponding to the cell that needs to be measured, so that the electronic device can search, based on the frequency corresponding to the cell that needs to be measured, for the cell that needs to be measured, to measure the cell that needs to be measured.

In some examples, the measurement indication information may further include a measurement start condition and a measurement reporting condition. The measurement start condition may indicate the electronic device to start measurement on the cell that needs to be measured. For example, the measurement start condition may include that duration for which the electronic device accesses the cell corresponding to the first access network device is greater than or equal to preset camping duration. In other words, when the duration for which the electronic device accesses the cell corresponding to the first access network device is greater than or equal to the preset camping duration, the electronic device may perform measurement on the cell that needs to be measured and that is included in the measurement indication information. The measurement start condition may further include another condition indicating the electronic device to start measurement on the cell that needs to be measured. This is not limited in this embodiment of this application. The measurement start condition may alternatively include that signal quality of the cell corresponding to the first access network device accessed by the electronic device is less than a preset threshold. The measurement start condition may further include that the signal quality of the cell corresponding to the first access network device accessed by the electronic device is less than the threshold for preset duration.

The measurement reporting condition may indicate the electronic device to report, after the electronic device measures the cell that needs to be measured, a measurement result of the cell that needs to be measured. For example, the measurement reporting condition may include that the signal quality of the cell corresponding to the first access network device accessed by the electronic device is less than the preset threshold. In other words, when the signal quality of the cell corresponding to the first access network device accessed by the electronic device is less than the preset threshold, the electronic device may send, to the first access network device, the measurement result of measurement performed on the cell that needs to be measured and that is included in the measurement indication information. The measurement reporting condition may further include another condition indicating the electronic device to report the measurement result of the cell that needs to be measured and that is included in the measurement indication information. This is not limited in this embodiment of this application.

In some examples, the measurement indication information may include a SIB message or a reconfiguration message. In other words, the SIB message or the reconfiguration message may indicate to perform measurement on the cell (for example, the cell currently accessed by the electronic device or the neighboring cell of the cell currently accessed by the electronic device) that needs to be measured. A specific type of the measurement indication information is not limited in this embodiment of this application.

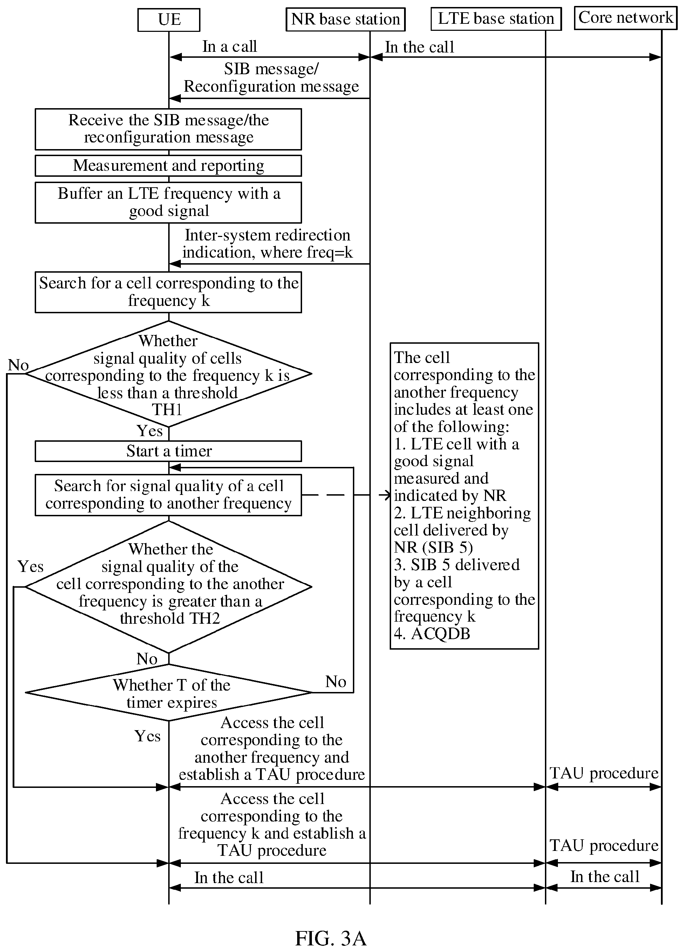

For example, as shown in FIG. 3A, in this embodiment of this application, that the electronic device receives the measurement indication information sent by the first access network device may include: The UE is connected to a core network through NR (namely, the macro base station), and the core network may be connected to another UE, so that the UE can make a call to the another UE through the NR and the core network.

When the UE makes a call to the another UE through the NR and the core network, the NR may broadcast a measurement indication message such as a SIB message or a reconfiguration message. The UE may receive the measurement indication message, namely, the SIB message or the reconfiguration message, broadcast by the NR. The measurement indication message may include a cell that needs to be measured. The cell that needs to be measured may include a cell currently accessed by the UE, or may include another cell such as a neighboring cell of the cell currently accessed by the UE.

S402: The electronic device measures the cell indicated by the measurement indication information, to obtain the measurement result, and sends the measurement result to the first access network device.

After receiving the measurement indication information sent by the first access network device, the electronic device may measure the cell (namely, the cell that needs to be measured) indicated by the measurement indication information, to obtain the measurement result of the cell that needs to be measured. The measurement result of the cell that needs to be measured may include the signal quality of the cell that needs to be measured. The cell that needs to be measured may include one or more cells, which is not limited in this embodiment of this application.

After the electronic device obtains the measurement result of the cell that needs to be measured, the electronic device may send the measurement result to the first access network device, so that the first access network device can determine, based on the measurement result of the cell that needs to be measured, whether the electronic device needs to re-access another cell.

In some examples, when the measurement indication information includes the frequency corresponding to the cell that needs to be measured, after the electronic device receives measurement indication information sent by the network side device, the electronic device may search, based on the frequency corresponding to the cell that needs to be measured, for the cell that needs to be measured, to measure the cell that needs to be measured, so as to obtain the measurement result.

In some examples, when the measurement indication information includes the measurement start condition, after the electronic device receives the measurement indication information sent by the first access network device, the electronic device may measure, when the measurement start condition is satisfied, the cell that needs to be measured and that is included in the measurement indication information.

In some examples, when the measurement indication information includes the measurement reporting condition, after the electronic device measures the cell indicated by the measurement indication information, to obtain the measurement result of the cell that needs to be measured, the electronic device may send, to the first access network device when the measurement reporting condition is satisfied, the measurement result of the cell that needs to be measured.

For example, still with reference to FIG. 3A, when the UE makes the call to the another UE through the NR base station and the core network, the NR base station may broadcast the measurement indication message such as the SIB message or the reconfiguration message. The UE may receive the measurement indication message broadcast by the NR base station, that is, the SIB message or the reconfiguration message. The measurement indication message may include the cell that needs to be measured. The cell that needs to be measured may include the cell currently accessed by the UE, or may include the another cell such as the neighboring cell of the cell currently accessed by the UE. After the UE receives the measurement indication information, the UE may measure the cell that needs to be measured and that is indicated by the measurement indication information. After the UE obtains the measurement result of the cell that needs to be measured, the UE may report, to the NR base station, the measurement result of the cell that needs to be measured.

S403: The electronic device stores, based on the measurement result, a frequency corresponding to a cell with signal quality greater than a third signal quality threshold.

After the electronic device measures the cell (namely, the cell that needs to be measured) indicated by the measurement indication information, to obtain the measurement result of the cell that needs to be measured, the electronic device may store the cell with the signal quality greater than the third signal quality threshold based on the measurement result. That is, the electronic device may store a cell with good signal quality. The third signal quality threshold may be set based on an actual situation. This is not limited in this embodiment of this application.

In some examples, the cell with the signal quality greater than the third signal quality threshold may be a cell corresponding to the LTE base station, or may be a cell corresponding to the NR base station. This is not limited in this embodiment of this application.

When the electronic device stores the cell with the signal quality greater than the third signal quality threshold, the electronic device stores signal quality information of the cell with the signal quality greater than the third signal quality threshold. For example, the electronic device may store information such as an identifier of the cell with the signal quality greater than the third signal quality threshold, the frequency corresponding to the cell with the signal quality greater than the third signal quality threshold, and signal strength of the cell with the signal quality greater than the third signal quality threshold. This is not limited in this embodiment of this application.

In some examples, after the electronic device measures the cell (namely, the cell that needs to be measured) indicated by the measurement indication information, to obtain the measurement result of the cell that needs to be measured, the electronic device may also store the cell that needs to be measured. In other words, the electronic device may store information such as an identifier of the cell that needs to be measured, the frequency corresponding to the cell that needs to be measured, and signal strength of the cell that needs to be measured.

For example, still with reference to FIG. 3A, when the UE makes the call to the another UE through the NR base station and the core network, the NR base station broadcasts the measurement indication message such as the SIB message or the reconfiguration message. The UE receives the measurement indication message, namely, the SIB message or the reconfiguration message, broadcast by the NR base station. The measurement indication message includes the cell that needs to be measured. After the UE receives the measurement indication information, the UE measures the cell that needs to be measured and that is indicated by the measurement indication information. After the UE obtains the measurement result of the cell that needs to be measured, the UE reports, to the NR base station, the measurement result of the cell that needs to be measured. After the UE reports, to the NR base station, the measurement result of the cell that needs to be measured, the UE may buffer a frequency corresponding to a measured LTE cell (where in some implementations, the UE may buffer a frequency corresponding to an LTE cell with signal strength greater than a preset threshold, that is, an LTE frequency with a good signal). Further, signal strength information corresponding to the LTE cell may further be buffered.

In some examples, a sequence in which the electronic device sends the measurement result to the first access network device, and the electronic device stores, based on the measurement result, the cell with the signal quality greater than the third signal quality threshold is not limited in this embodiment of this application. For example, after obtaining the measurement result of the cell that needs to be measured, the electronic device may first send the measurement result to the first access network device, and then store, based on the measurement result, the cell with the signal quality greater than the third signal quality threshold; the electronic device may first store, based on the measurement result, the cell with the signal quality greater than the third signal quality threshold, and then send the measurement result to the first access network device; or the electronic device may store, based on the measurement result, the cell with the signal quality the greater than the third signal quality threshold while sending the measurement result to the first access network device. This embodiment of this application is described by using an example in which the electronic device first sends the measurement result to the first access network device, and then stores, based on the measurement result, the cell with the signal quality greater than the third signal quality threshold.

It should be noted that, alternatively, when the electronic device does not receive the measurement indication information sent by the first access network device, for example, when the electronic device is not making a call, the electronic device may search a frequency corresponding to a current location, and measure a cell corresponding to the frequency corresponding to the current location. When the electronic device obtains, through measurement, signal quality of the cell corresponding to the frequency corresponding to the current location, the electronic device may store a cell with signal quality greater than the third signal quality threshold and corresponding location information. The frequency corresponding to the current location may include a frequency corresponding to the NR base station, or may include a frequency corresponding to the LTE base station. In other words, the electronic device may search for a cell with good signal quality in advance, and store the cell with the good signal quality and corresponding location information. In this way, when the electronic device receives redirection indication information sent by the first access network device, where the redirection indication information includes a first frequency, the electronic device can directly access the cell (where a frequency corresponding to the cell may be the first frequency or may not be the first frequency; and the cell may be an NR cell or may be an LTE cell) that corresponds to a current location of the electronic device, that is searched for by the electronic device in advance, and that has the good signal quality at the location, without searching the first frequency and without determining signal quality of a cell corresponding to the first frequency.

S404: The electronic device receives the redirection indication information sent by the first access network device, where the redirection indication information includes the first frequency.

After the electronic device sends the measurement result to the first access network device, the first access network device may receive the measurement result. After the first access network device can receive the measurement result, the network side device may determine, based on the measurement result, whether the electronic device needs to access another cell.

In some examples, after the first access network device can receive the measurement result, and the measurement result includes a measurement result of the cell currently accessed by the electronic device (for example, signal quality of the cell currently accessed by the electronic device and signal quality of the neighboring cell of the cell currently accessed by the electronic device), the first access network device may determine, based on the signal quality of the cell currently accessed by the electronic device, whether the electronic device needs to access another cell. When the signal quality of the cell currently accessed by the electronic device is greater than or equal to a first preset threshold, the first access network device may determine that the electronic device does not need to access another cell, that is, the electronic device does not need to perform redirection on the accessed cell. The first preset threshold may be set based on an actual situation. This is not limited in this embodiment of this application.

When the signal quality of the cell currently accessed by the electronic device is less than the first preset threshold, the first access network device may determine that the electronic device needs to access another cell, that is, the electronic device needs to perform redirection on the accessed cell. When the first access network device determines that the electronic device needs to access the another cell, the first access network device may send the redirection indication information to the electronic device. The redirection indication information may indicate the electronic device to access the another cell, for example, the cell corresponding to the first frequency (which may be referred to as a first cell in this embodiment of this application). There may be one or more cells corresponding to the first frequency. This is not limited in this embodiment of this application.

The first frequency may be a frequency corresponding to the NR base station or may be a frequency corresponding to the LTE base station. This is not limited in this embodiment of this application. The first frequency may be one or more frequencies. This is not limited in this embodiment of this application.

In some examples, the first frequency may be a frequency corresponding to a cell with signal quality greater than a second preset threshold in the measurement result. That is, the signal quality of the cell corresponding to the first frequency is greater than the second preset threshold. The second preset threshold may be set based on an actual situation. This is not limited in this embodiment of this application.

For example, when the first access network device determines, based on the measurement result sent by the electronic device (where the measurement result includes the signal quality of the cell currently accessed by the electronic device and the signal quality of the neighboring cell of the cell currently accessed by the electronic device), that the signal quality of the cell currently accessed by the electronic device is less than the second threshold (that is, the signal quality of the cell currently accessed by the electronic device is poor), the first access network device may determine that the electronic device needs to access another cell. The first access network device may determine, in the measurement result, that the frequency corresponding to the cell with the signal quality greater than the third threshold is the first frequency. The first access network device may send the redirection indication information to the electronic device. The redirection indication information includes the first frequency. Therefore, the electronic device can access the cell corresponding to the first frequency.

For another example, when the first access network device determines, based on the measurement result sent by the electronic device (where the measurement result includes the signal quality of the cell currently accessed by the electronic device and the signal quality of the neighboring cell of the cell currently accessed by the electronic device), that the signal quality of the cell currently accessed by the electronic device is less than the first preset threshold (that is, the signal quality of the cell currently accessed by the electronic device is poor), and the signal quality of the neighboring cell of the cell currently accessed by the electronic device is less than the first preset threshold (that is, the signal quality of the neighboring cell of the cell currently accessed by the electronic device is poor), the first access network device may determine that the electronic device needs to access a cell corresponding to another network standard. The first access network device may determine, in the measurement result, that a frequency corresponding to the cell corresponding to the another network standard with signal quality greater than the second preset threshold is the first frequency. The first access network device may send the redirection indication information to the electronic device. The redirection indication information may be inter-system redirection indication information. The inter-system redirection indication information may indicate the electronic device to access a cell corresponding to a network standard different from that of the currently accessed cell.

In some examples, the first frequency may be a preset frequency. That is, the first access network device may preset the preset frequency. For example, when the first access network device determines, based on the measurement result sent by the electronic device (where the measurement result includes the signal quality of the cell currently accessed by the electronic device), that the signal quality of the cell currently accessed by the electronic device is less than the first preset threshold (that is, the signal quality of the cell currently accessed by the electronic device is poor), the first access network device may determine that the electronic device needs to access another cell. The first access network device may send the redirection indication information to the electronic device. The redirection indication information includes the preset frequency (namely, the first frequency). Therefore, the electronic device can access the cell corresponding to the preset frequency.

In some examples, the first frequency may be a frequency corresponding to a macro base station, or may be a frequency corresponding to an indoor distributed base station. That is, a cell corresponding to the first frequency may be a cell corresponding to the macro base station, or may be an indoor distributed cell. This is not limited in this embodiment of this application.

It should be noted that the network standard corresponding to the first frequency may be the same as or different from a network standard corresponding to the first access network device (that is, the network side device currently accessed by the electronic device). This is not limited in this embodiment of this application. For example, when the first access network device currently accessed by the electronic device is an NR base station, the first frequency may be a frequency corresponding to the NR base station, or the first frequency may be a frequency corresponding to the LTE.

For example, still with reference to FIG. 3A, when the UE makes the call to the another UE through the NR base station and the core network, the NR base station broadcasts the measurement indication message such as the SIB message or the reconfiguration message. The UE receives the measurement indication message, namely, the SIB message or the reconfiguration message, broadcast by the NR base station. The measurement indication message includes the cell that needs to be measured. After the UE receives the measurement indication information, the UE measures the cell that needs to be measured and that is indicated by the measurement indication information. After the UE obtains the measurement result of the cell that needs to be measured, the UE reports, to the NR base station, the measurement result of the cell that needs to be measured, and buffers frequency and strength information that correspond to the measured LTE cell. After the UE reports, to the NR base station, the measurement result of the cell that needs to be measured, the NR base station may determine, based on the measurement result, whether the UE needs to access another cell. When determining that the UE needs to access another cell, the NR base station may send the inter-system redirection indication information to the UE. The inter-system redirection indication information may include the frequency (namely, the first frequency), for example, a frequency freq=k, corresponding to the LTE cell.

S405: The electronic device determines whether signal quality of the one or more cells corresponding to the first frequency is less than a first signal quality threshold.

After the electronic device receives the redirection indication information sent by the first access network device, where the redirection indication information includes the first frequency, the electronic device may determine whether the signal quality of the cell corresponding to the first frequency is less than the first signal quality threshold. In other words, the electronic device may measure the signal quality of the first cell corresponding to the first frequency based on the redirection indication information, and determine whether the signal quality of the first cell corresponding to the first frequency is less than the first signal quality threshold. The first signal quality threshold may be set based on an actual situation. This is not limited in this embodiment of this application. For example, when the first signal quality threshold is energy Energy of a cell, the first signal quality threshold may be -110 dBm/100 KHz.

In a case in which the electronic device determines that the signal quality of the cell corresponding to the first frequency is greater than or equal to the first signal quality threshold, the electronic device may access the cell corresponding to the first frequency. In other words, the electronic device may continue to perform S406 described below. In a case in which the electronic device determines that the signal quality of the cell corresponding to the first frequency is less than the first signal quality threshold, the electronic device may start a timer, and continue to determine, within preset duration corresponding to the timer, whether signal quality of a cell (for example, referred to as a second cell) corresponding to another frequency is greater than a second signal quality threshold. In other words, the electronic device may continue to perform S407 described below.

For example, still with reference to FIG. 3A, after the UE reports, to the NR base station, the measurement result of the cell that needs to be measured, when the NR base station determines, based on the measurement result, that the UE needs to access another cell, the NR base station sends the redirection indication information to the UE, for example, the inter-system redirection indication information. The inter-system redirection indication information may include the frequency (namely, the first frequency), for example, the frequency freq=k, corresponding to the LTE cell. After the UE receives the inter-system redirection indication information, the UE may search the frequency k, so that the UE can find one or more cells corresponding to the frequency k. After the UE finds the one or more cells corresponding to the frequency k, the UE may measure the one or more cells corresponding to the frequency k, to determine whether signal quality of the one or more cells corresponding to the frequency k is less than the first signal quality threshold, namely, a threshold TH1. When the UE determines that the signal quality of the cell corresponding to the frequency k is less than the first signal quality threshold, the UE may determine that the signal quality of the cell corresponding to the frequency k is poor, so that the UE can start the timer and search for a cell corresponding to another frequency.

S406: The electronic device accesses the cell corresponding to the first frequency.

When the electronic device determines that the signal quality of the cell corresponding to the first frequency is greater than or greater than the first signal quality threshold, the electronic device may determine that the signal quality of the cell corresponding to the first frequency is good, so that the electronic device can access the cell, namely, the first cell, corresponding to the first frequency.

For example, still with reference to FIG. 3A, after the UE reports, to the NR base station, the measurement result of the cell that needs to be measured, when the NR base station determines, based on the measurement result, that the UE needs to access another cell, the NR base station sends the redirection indication information to the UE, for example, the inter-system redirection indication information. The inter-system redirection indication information may include the frequency (namely, the first frequency), for example, the frequency freq=k, corresponding to the LTE cell. After the UE receives the inter-system redirection indication information, the UE may search for the frequency k, so that the UE can find the cell corresponding to the frequency k. After the UE finds the cell corresponding to the frequency k, the UE may measure the cell corresponding to the frequency k, to determine whether the signal quality of the cell corresponding to the frequency k is less than the first signal quality threshold. When the UE determines that the signal quality of the cell corresponding to the frequency k is greater than or equal to the first signal quality threshold, the UE may determine that the signal quality of the cell corresponding to the frequency k is good, so that the UE can access the cell corresponding to the frequency k. Therefore, the UE can establish a TAU procedure with an LTE base station corresponding to the frequency k, and the LTE base station can perform a TAU procedure with the core network, so that the UE can make a call to another UE.

It should be noted that, when the first frequency corresponds to a plurality of cells, if a plurality of cells with signal quality greater than or equal to the first signal quality threshold exist in the plurality of cells corresponding to the first frequency, the electronic device may determine a cell with best signal quality in the plurality of cells with the signal quality greater than or equal to the first signal quality threshold, so that the electronic device can access the cell with the best signal quality.

S407: The electronic device starts the timer.

When the electronic device determines that the signal quality of the one or more cells corresponding to the first frequency is less than the first signal quality threshold, the electronic device may determine that the signal quality of the cell corresponding to the first frequency is poor, and the electronic device may start the timer, so that the electronic device can search for a cell corresponding to another frequency within the preset duration corresponding to the timer. In other words, timing duration of the timer is the preset duration, and may be used for determining whether the electronic device accesses the cell corresponding to the another frequency. The timer is set, so that it can be ensured that the electronic device searches for the cell corresponding to the another frequency in time, thereby ensuring that the electronic device determines in time whether to access the cell corresponding to the another frequency.

The preset duration corresponding to the timer may be set based on an actual situation. This is not limited in this embodiment of this application. For example, the preset duration corresponding to the timer may be 2 seconds or 3 seconds.

For example, still with reference to FIG. 3A, after the UE finds the one or more cells corresponding to the frequency k, the UE may perform measurement on the one or more cells corresponding to the frequency k, to determine whether the signal quality of the one or more cells corresponding to the frequency k is less than the first signal quality threshold. When the UE determines that the signal quality of the one or more cells corresponding to the frequency k is less than the first signal quality threshold, the UE may determine that the signal quality of the cell corresponding to the frequency k is poor, and the UE may start the timer, so that the UE can search for the cell corresponding to the another frequency within the preset duration corresponding to the timer.

S408: The electronic device determines whether signal quality of a cell (which is referred to as the second cell in this specification) corresponding to a second frequency is greater than or equal to the second signal quality threshold.

After the electronic device starts the timer, the electronic device may determine whether the signal quality of the second cell is greater than or equal to the second signal quality threshold. The second signal quality threshold may be greater than or equal to the first signal quality threshold. A specific value of the second signal quality threshold may be set based on an actual situation. This is not limited in this embodiment of this application. For example, the second signal quality threshold is energy Energy of a cell, and when the first signal quality threshold may be -110 dBm/100 KHz, the second signal quality threshold may be -100 dBm/100 KHz.

In a case in which the electronic device determines that the signal quality of the second cell is greater than or equal to the second signal quality threshold, the electronic device may access the second cell. That is, the electronic device may continue to perform S409 described below. In a case in which the electronic device determines that the signal quality of the second cell is less than the second signal quality threshold, the electronic device may determine whether the timer reaches the preset duration. That is, the electronic device may continue to perform S410 described below.

The second cell is any one of one or more cells corresponding to the second frequency, and the second frequency may be different from the first frequency. The second frequency may be one or more of frequencies corresponding to one or more of the following cases: a frequency corresponding to a fourth cell, where the fourth cell is a cell with signal quality greater than the third signal quality threshold in a third cell corresponding to the third frequency; or a frequency corresponding to the neighboring cell of the cell currently accessed by the electronic device; or a frequency corresponding to a neighboring cell of the first cell; or a frequency corresponding to a cell historically accessed by the electronic device at the current location.

For example, the second cell may be a cell different from both the cell currently accessed by the electronic device and the cell corresponding to the first frequency. A network standard of the second cell may be different from the network standard of the cell currently accessed by the electronic device. For example, when the cell currently accessed by the electronic device is the cell corresponding to the NR base station, the second cell may be a cell corresponding to the LTE base station. The second cell may be a cell corresponding to the macro base station, or the second cell may be an indoor distributed cell.

In some examples, the second cell may include a cell with signal quality greater than the third signal quality threshold stored in the electronic device, and a frequency corresponding to the cell is different from the first frequency. In other words, after the electronic device measures, based on the measurement indication information sent by the network side device, the cell indicated by the measurement indication information, to obtain the measurement result, the electronic device stores the cell, namely, the first cell, with the signal quality greater than the first threshold. When the electronic device determines that the signal quality of the cell corresponding to the first frequency is poor, the electronic device may determine a cell with signal quality greater than the second signal quality threshold from the stored cell (namely, the first cell) with the signal quality greater than the first threshold. That is, the second cell may include the fourth cell, and the fourth cell is the cell with the signal quality greater than the third signal quality threshold in the third cell corresponding to the third frequency. That is, the third frequency may be the same as the second frequency.

It should be noted that, when the second cell may include the cell with the signal quality greater than the third signal quality threshold stored in the electronic device, when the electronic device determines whether the signal quality of the second cell is greater than the second signal quality threshold, because the cell with the signal quality greater than the third signal quality threshold stored in the electronic device is measured and stored by the electronic device, whether the signal quality of the stored cell with the signal quality greater than the third signal quality threshold is greater than the second signal quality threshold may be first determined.

In some examples, the electronic device may first determine, based on location information or time information of the electronic device, whether the stored cell with the signal quality greater than the third signal quality threshold is greater than the second signal quality threshold. To be specific, when location change of the electronic device is small, or an interval between time when the electronic device determines whether the signal quality of the second cell is greater than or equal to the second signal quality threshold and time when the electronic device measures, based on the measurement indication information, and stores the cell with the signal quality greater than the third signal quality threshold is small, the electronic device may not measure the cell that needs to be measured and that is in the measurement indication information, and the electronic device may first determine whether the signal quality of the stored cell with the signal quality greater than the third signal quality threshold is greater than the second signal quality threshold, to reduce time for the electronic device to access the cell.

In some other examples, the second cell may further include the neighboring cell of the cell currently accessed by the electronic device. A network standard of the neighboring cell may be different from the network standard of the cell currently accessed by the electronic device, and the frequency corresponding to the neighboring cell is different from the first frequency. For example, when the cell currently accessed by the electronic device is a cell corresponding to the NR base station, the first cell may include an LTE neighboring cell of the cell pair corresponding to the NR base station. When the first cell includes the LTE neighboring cell of the cell pair corresponding to the NR base station, the electronic device may obtain the LTE neighboring cell of the cell pair corresponding to the NR base station through a SIB 5 message sent by the network side device. In other words, the neighboring cell of the cell currently accessed by the electronic device may include at least one of a cell within coverage of the first access network device or a cell within coverage of a second access network device, and network standards of the second access network device and the first access network device are different.

In some other examples, the second cell may further include a neighboring cell of the cell corresponding to the first frequency, and a frequency corresponding to the neighboring cell is different from the first frequency. For example, when the second cell includes the neighboring cell of the cell corresponding to the first frequency, the electronic device may obtain the neighboring cell of the cell corresponding to the first frequency through a SIB 5 message sent by the access network device corresponding to the first frequency.

In some other examples, the second cell may further include the cell historically accessed by the electronic device at the current location. For example, when the second cell includes the cell historically accessed by the electronic device at the current location, the electronic device may obtain, from an acqknowledge data base (acqknowledge data base, ACQDB) in the electronic device, the frequency corresponding to the historical access by the electronic device at the current location, to obtain the cell historically accessed by the electronic device at the current location.

It should be noted that, when the second cell includes the cell (namely, the fourth cell) with the signal quality greater than the third signal quality threshold stored in the electronic device, the neighboring cell of the cell currently accessed by the electronic device, the neighboring cell of the cell corresponding to the first frequency, and the cell historically accessed by the electronic device at the current location, the electronic device may determine, based on a preset order, whether the signal quality of the second cell is greater than or equal to the second signal quality threshold. The preset order may include the following: Whether the signal quality of the cell with the signal quality greater than the third signal quality threshold is greater than or equal to the second signal quality threshold is first determined. When the signal quality of the cell with the signal quality greater than the third signal quality threshold is less than the second signal quality threshold, the electronic device may determine whether the signal quality of the neighboring cell of the cell currently accessed by the electronic device is greater than or equal to the second signal quality threshold. When the signal quality of the neighboring cell of the cell currently accessed by the electronic device is less than the second signal quality threshold, the electronic device may determine whether signal quality of the neighboring cell of the cell corresponding to the first frequency is greater than or equal to the second signal quality threshold. When the electronic device determines that the signal quality of the neighboring cell of the cell corresponding to the first frequency is less than the second signal quality threshold, the electronic device may continue to determine whether signal quality of the cell historically accessed by the electronic device at the current location is greater than or equal to the second signal quality threshold.

In other words, in a case in which the second cell includes at least two of the fourth cell, the neighboring cell of the cell currently accessed by the electronic device, the neighboring cell of the first cell, or the historically accessed cell, when determining whether the signal quality of the second cell is greater than or equal to the second signal quality threshold, the electronic device may sequentially measure the signal quality of the second cell based on measurement priorities of the second cell. A measurement priority of the fourth cell is higher than a measurement priority of the neighboring cell of the cell currently accessed by the electronic device, the measurement priority of the neighboring cell of the cell currently accessed by the electronic device is higher than a measurement priority of the neighboring cell of the first cell, and the measurement priority of the neighboring cell of the first cell is higher than a measurement priority of the historically accessed cell.

It should be noted that the signal quality of the second cell is sequentially measured based on measurement priorities of the second frequency in a case in which the second frequency includes at least two of the frequency corresponding to the fourth cell, the frequency corresponding to the neighboring cell of the cell currently accessed by the electronic device, the frequency corresponding to the neighboring cell of the first cell, and the frequency corresponding to the cell historically accessed by the electronic device at the current location. A measurement priority of the frequency corresponding to the fourth cell is higher than a measurement priority of the frequency corresponding to the neighboring cell of the cell currently accessed by the electronic device, the measurement priority of the frequency corresponding to the neighboring cell of the cell currently accessed by the electronic device is higher than a measurement priority of the frequency corresponding to the neighboring cell of the first cell, and the measurement priority of the frequency corresponding to the neighboring cell of the first cell is higher than a measurement priority of the frequency corresponding to the historically accessed cell.

For example, still with reference to FIG. 3A, after the UE finds the cell corresponding to the frequency k, the UE may measure the cell corresponding to the frequency k, to determine whether the signal quality of the cell corresponding to the frequency k is less than the first signal quality threshold. When the UE determines that the signal quality of the cell corresponding to the frequency k is less than the first signal quality threshold, the UE may determine that the signal quality of the cell corresponding to the frequency k is poor, and the UE may start the timer. After the UE starts the timer, the UE may search for a cell corresponding to another frequency. After the UE finds the cell corresponding to the another frequency, the UE may determine whether signal quality of the cell corresponding to the another frequency is greater than or equal to the second signal quality threshold, namely, a threshold TH2.

It should be noted that the second cell may include one cell, or may include a plurality of cells. In a case in which the second cell includes the plurality of cells, the electronic device may determine, within the preset duration corresponding to the timer, whether signal quality of the plurality of cells is greater than or equal to the second signal quality threshold.

S409: The electronic device determines a target cell with signal quality greater than the second signal quality threshold in the second cell, and accesses the target cell.

When the electronic device determines whether signal quality of one or more second cells is greater than or equal to the second signal quality threshold, the electronic device may determine a cell, namely, the target cell, with best signal quality from the one or more second cells, so that the electronic device can access the target cell.

For example, still with reference to FIG. 3A, after the UE finds the cell corresponding to the frequency k, the UE may measure the cell corresponding to the frequency k, to determine whether the signal quality of the cell corresponding to the frequency k is less than the first signal quality threshold. When the UE determines that the signal quality of the cell corresponding to the frequency k is less than the first signal quality threshold, the UE may determine that the signal quality of the cell corresponding to the frequency k is poor, and the UE may start the timer. After the UE starts the timer, the UE may search for a cell corresponding to another frequency. After the UE finds the cell corresponding to the another frequency, the UE may determine whether signal quality of the cell corresponding to the another frequency is greater than or equal to the second signal quality threshold, namely, the threshold TH2. When the UE determines whether the signal quality of the cell (namely, the first cell) corresponding to the another frequency is greater than or equal to the second signal quality threshold, the UE may determine that the signal quality of the first cell is good, so that the UE can access the first cell. In this way, the UE can establish the TAU procedure with the LTE base station corresponding to the first cell, and the LTE base station can perform the TAU procedure with the core network, so that the UE can make a call to another UE.

It should be noted that, when the second cell includes the plurality of cells, and a plurality of cells with signal quality greater than or equal to the second signal quality threshold exist in the plurality of cells, the electronic device may determine a cell with best signal quality from the plurality of cells with the signal quality greater than or equal to the second signal quality threshold as a cell that needs to be accessed by the electronic device.

In other words, in a case in which the plurality of cells with the signal quality greater than the second signal quality threshold exist in the second cell, the electronic device may determine the cell with the best signal quality from the cells with the signal quality greater than the second signal quality threshold as the target cell, so that the electronic device can access the cell with the best signal quality.

S410: The electronic device determines whether duration of the timer reaches the preset duration.

When the electronic device determines that the signal quality of the first cell is less than the second signal quality threshold, the electronic device may determine that the signal quality of the first cell is poor, and the electronic device may determine whether the timer reaches the preset duration.

In a case in which the electronic device determines that the duration of the timer does not reach the preset duration, the electronic device may continue to determine whether the signal quality of the second cell is greater than the second signal quality threshold. That is, the electronic device may continue to perform S408. In a case in which the electronic device determines that the duration of the timer reaches the preset duration, in other words, the electronic device determines that the signal quality of the second cell is poor, the electronic device may access the cell corresponding to the first frequency. That is, the electronic device may continue to perform S411 described below.

It should be noted that, in a case in which the second cell includes the plurality of cells, if the electronic device determines that the timer does not reach the preset duration, the electronic device continues to determine whether the signal quality of the second cell is greater than or equal to the second signal quality threshold, which may be that the electronic device continues to determine whether signal quality of another cell in the second cell is greater than or equal to the second signal quality threshold.

For example, still with reference to FIG. 3A, after the UE finds the cell corresponding to the frequency k, the UE may measure the cell corresponding to the frequency k, to determine whether the signal quality of the cell corresponding to the frequency k is less than the first signal quality threshold. When the UE determines that the signal quality of the cell corresponding to the frequency k is less than the first signal quality threshold, the UE may determine that the signal quality of the cell corresponding to the frequency k is poor, and the UE may start the timer. After the UE starts the timer, the UE may search for a cell corresponding to another frequency. After the UE finds the cell corresponding to the another frequency, the UE may determine whether signal quality of the cell corresponding to the another frequency is greater than or equal to the second signal quality threshold, namely, the threshold TH2. When the UE determines that the signal quality of the cell (namely, the second cell) corresponding to the another frequency is less than the second signal quality threshold, the UE may determine whether the duration T of the timer exceeds the preset duration. When the UE determines that the duration T of the timer does not exceed the preset duration, the UE may continue to search for a cell corresponding to another frequency, to determine whether signal quality of a signal of the another cell is greater than the threshold TH2.

S411: The electronic device accesses the cell corresponding to the first frequency.

In a case in which the electronic device determines that the duration of the timer exceeds the preset duration, the electronic device may determine that the signal quality of the second cell is poor, and the electronic device may access the cell corresponding to the first frequency, so that the electronic device can access the cell in time.

For example, still with reference to FIG. 3A, after the UE starts the timer, the UE may search for a cell corresponding to another frequency. After the UE finds the cell corresponding to the another frequency, the UE may determine whether signal quality of the cell corresponding to the another frequency is greater than or equal to the second signal quality threshold, namely, the threshold TH2. When the UE determines that the signal quality of the cell (namely, the first cell) corresponding to the another frequency is less than the second signal quality threshold, the UE may determine whether the duration T of the timer exceeds the preset duration. When the UE determines that the duration T of the timer exceeds the preset duration, the UE may access the cell corresponding to the first frequency.

It should be noted that, when the first frequency corresponds to a plurality of cells, if a plurality of cells with signal quality greater than or equal to the first signal quality threshold exist in the plurality of cells corresponding to the first frequency, the electronic device may determine a cell with best signal quality in the plurality of cells with the signal quality greater than or equal to the first signal quality threshold, so that the electronic device can access the cell with the best signal quality.

In the solutions in this application, when the electronic device makes a call through the currently accessed cell, if the signal quality of the currently accessed cell is poor, the network side device sends the redirection indication to the electronic device, where the redirection indication information includes the first frequency. When the electronic device determines that signal quality of all cells corresponding to the first frequency included in the redirection indication information is poor, the electronic device may start the timer, and search for the cell (namely, the second cell) corresponding to the another frequency within search time corresponding to the timer. When the signal quality of the cell corresponding to the another frequency is good, the electronic device may access the cell with the good signal quality. Therefore, a problem of a call lag or a call abnormality in a call between the electronic device and another electronic device can be avoided, thereby ensuring call quality of the electronic device.

An embodiment of this application further provides a cell accessing apparatus corresponding to the method in the foregoing embodiments. The cell accessing apparatus may be used in an electronic device, to implement the method in the foregoing embodiments. A function of the cell accessing apparatus may be implemented by hardware or by hardware executing corresponding software. The hardware or the software includes one or more modules corresponding to the function.

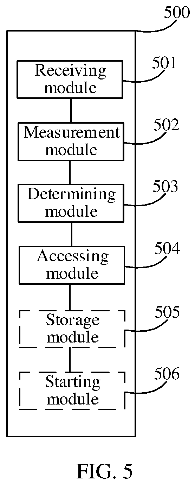

For example, FIG. 5 is a schematic diagram of a structure of a cell accessing apparatus 500. As shown in FIG. 5, the cell accessing apparatus 500 may include: a receiving module 501, a measurement module 502, a determining module 503, an accessing module 504, and the like.

The receiving module 501 may be configured to receive redirection indication information from a first access network device, where the redirection indication information includes a first frequency; and the first access network device is an access network device currently connected to the electronic device.

The measurement module 502 may be configured to measure, based on the redirection indication information, signal quality of a first cell corresponding to the first frequency.

The measurement module 502 may be further configured to measure, in a case in which the signal quality of the first cell corresponding to the first frequency is less than a first signal quality threshold, signal quality of a second cell corresponding to a second frequency, where the second frequency is different from the first frequency.

The determining module 503 may be configured to: in a case in which a cell with signal quality greater than or equal to a second signal quality threshold exists in the second cell, determine a target cell from a cell with signal quality greater than the second signal quality threshold.

The accessing module 504 may be further configured to access the target cell. The first signal quality threshold is less than or equal to the second signal quality threshold.

In another possible implementation, the receiving module 501 may be further configured to receive measurement indication information from the first access network device, where the measurement indication information includes a third frequency.

The measurement module 502 may be further configured to measure, based on the measurement indication information, signal quality of a third cell corresponding to the third frequency.

The cell accessing apparatus 500 may further include a storage module 505.

The storage module 505 may be configured to store signal quality information of a cell with signal quality greater than a third signal quality threshold in the third cell corresponding to the third frequency. the second cell includes a cell with signal quality greater than the third signal quality threshold in the third cell corresponding to the third frequency.

In another possible implementation, the second cell includes at least one of the following: a fourth cell, where the fourth cell is a cell with signal quality greater than the third signal quality threshold in the third cell corresponding to the third frequency; a neighboring cell of a cell currently accessed by the electronic device, where the neighboring cell of the cell currently accessed by the electronic device may include at least one of a cell within coverage of the first access network device or a cell within coverage of a second access network device, and network standards of the second access network device and the first access network device are different; a neighboring cell of the first cell; and a cell historically accessed by the electronic device at a current location.

In another possible implementation, the first access network device is a new radio NR base station, and the second access network device is a long term evolution LTE base station.

In another possible implementation, the measurement module 502 may be specifically configured to: sequentially measure the signal quality of the second cell based on measurement priorities of the second cell in a case in which the second cell includes at least two of the fourth cell, the neighboring cell of the cell currently accessed by the electronic device, the neighboring cell of the first cell, or the historically accessed cell. A measurement priority of the fourth cell is higher than a measurement priority of the neighboring cell of the cell currently accessed by the electronic device, the measurement priority of the neighboring cell of the cell currently accessed by the electronic device is higher than a measurement priority of the neighboring cell of the first cell, and the measurement priority of the neighboring cell of the first cell is higher than a measurement priority of the historically accessed cell.

In another possible implementation, the cell accessing apparatus 500 may further include a starting module 506.

The starting module 506 may be configured to start a timer. Timing duration of the timer is preset duration.

The measurement module 502 may be specifically configured to measure the signal quality of the second cell corresponding to the second frequency within the preset duration.

In another possible implementation, in a case in which a plurality of cells with signal quality greater than the second signal quality threshold exist in the second cell, the target cell is a cell with best signal quality in the plurality of cells.

In another possible implementation, the accessing module 504 may be further configured to access the first cell in a case in which the signal quality of the second cell is less than the second signal quality threshold.

In another possible implementation, the preset duration is 2 seconds or 3 seconds.

It should be understood that division into units or modules (referred to as units below) in the apparatus is merely logical function division. During an actual implementation, a part or all of the units or modules may be integrated into a physical entity or may be physically separated. The units in the apparatus may all be implemented in a form of software invoked by a processing element; or may all be implemented in a form of hardware; or some units are implemented in a form of software invoked by a processing element, and some units are implemented in a form of hardware.

For example, the units may be processing elements that are independently arranged, or may be integrated in a chip of the apparatus for implementation. In addition, the units may alternatively be stored in a memory in a form of a program, and are invoked by a processing element of the apparatus to perform functions of the units. In addition, a part or all of the units may be integrated together, or may be implemented independently. The processing element may also be referred to as a processor and may be an integrated circuit having a signal processing capability. In an implementation process, steps in the foregoing method or the foregoing units may be implemented through a hardware integrated logical circuit in a processor element or may be implemented in a form of software invoked by a processing element.

In an example, the units in the foregoing apparatus may be one or more integrated circuits configured to implement the foregoing methods, for example, one or more ASICs, one or more DSPs, one or more FPGAs, or a combination of at least two of these integrated circuit forms.

In another example, when a unit in the apparatus can be implemented in a form of a processing element scheduling a program, the processing element may be a general-purpose processor, for example, a CPU or another processor that can invoke a program. In another example, these units may be integrated together and implemented in a form of a system on a chip SOC.

In an implementation, the units in the foregoing apparatus that implement corresponding steps in the foregoing methods may be implemented in a form of scheduling a program by using the processing element. For example, the apparatus may include a processing element and a storage element, and the processing element invokes a program stored in the storage element to perform the method described in the foregoing method embodiments. The storage element may be a storage element that is on a same chip as the processing element, namely, an on-chip storage element.

In another implementation, the program used to perform the foregoing methods may be on a storage element that is located on a different chip from the processing element, that is, an off-chip storage element. In this case, the processing element invokes or loads the program from the off-chip storage element onto the on-chip storage element, to invoke and perform the method described in the foregoing method embodiment.

For example, an embodiment of this application may further provides an apparatus, for example, an electronic device may include: a processor and a memory configured to store instructions executable by the processor. The processor is configured to enable, when executing the instructions, the electronic device to implement the cell accessing method described in the foregoing embodiments. The memory may be located inside the electronic device or may be located outside the electronic device. In addition, there may be one or more processors.

In still another implementation, the units in the apparatus that implement the steps in the foregoing methods may be configured as one or more processing elements, and these processing elements may be disposed on the corresponding electronic device described above. The processing elements herein may be integrated circuits, such as one or more ASICs, one or more DSPs, one or more FPGAs, or a combination of these types of integrated circuits. The integrated circuits may be integrated together to form a chip.

For example, an embodiment of this application further provides a chip. The chip is applicable to the foregoing electronic device. The chip includes one or more interface circuits and one or more processors, where The interface circuit and the processor are interconnected by a line. The processor receives and executes computer instructions from the memory of the electronic device through the interface circuit to implement the method in the foregoing method embodiments.

An embodiment of this application further provides a computer program product, including computer instructions run on the foregoing electronic device.

A person skilled in the art may clearly learn from the foregoing descriptions of the implementations that, for convenience and brevity of description, division into the foregoing functional modules is only used as an example for description. During actual application, the foregoing functions may be allocated to different functional modules for implementation based on a requirement. That is, an inner structure of an apparatus is divided into different functional modules, to complete all or some of the functions described above.

In several embodiments provided in this application, it should be understood that the disclosed apparatus and method may be implemented in other manners. For example, the foregoing described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The foregoing integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiments of this application essentially or the part contributing to the conventional technology or a part or all of the technical solutions may be implemented in a form of a software product, for example: a program. The software product is stored in a program product such as a computer-readable storage medium and includes several instructions for instructing a device (which may be a single-chip microcomputer, a chip, or the like) or a processor (processor) to perform a part or all of the steps of the methods described in embodiments of this application. The storage medium includes: any medium that can store program code, for example, a USB flash drive, a removable hard disk, a ROM, a RAM, a magnetic disk, or an optical disc.

For example, an embodiment of this application may further provide a computer-readable storage medium, storing computer program instructions thereon. When the computer program instructions are executed by an electronic device, the electronic device is enabled to implement the cell accessing method described in the foregoing method embodiments.

The foregoing descriptions are merely specific implementations of this application, but are not intended to limit the protection scope of this application. Any change or replacement made within the technical scope disclosed in this application shall fall within the protection scope of this application. Therefore, the protection scope of this application should be subject to the protection scope of the claims.

## Claims

1. A cell accessing method, applied to an electronic device, wherein the method comprises:
receiving redirection indication information from a first access network device, wherein the redirection indication information comprises a first frequency and a first standard, and the first frequency belongs to the first standard; and the first access network device is an access network device currently connected to the electronic device;
measuring, based on the redirection indication information, signal quality of a first cell corresponding to the first frequency;
in a case in which the signal quality of the first cell corresponding to the first frequency is less than a first signal quality threshold, measuring signal quality of a second cell corresponding to a second frequency, wherein the second frequency belongs to the first standard, and the second frequency is different from the first frequency; and
accessing a target cell in a case in which a cell with signal quality greater than or equal to a second signal quality threshold exists in the second cell, wherein the target cell is a cell with signal quality greater than the second signal quality threshold in the second cell, wherein the first signal quality threshold is less than or equal to the second signal quality threshold.

2. The method according to claim 1, further comprising:
receiving measurement indication information from the first access network device, wherein the measurement indication information comprises a third frequency;
measuring, based on the measurement indication information, signal quality of a third cell corresponding to the third frequency; and
storing signal quality information of a cell with signal quality greater than a third signal quality threshold in the third cell corresponding to the third frequency, wherein the second cell comprises a cell with signal quality greater than the third signal quality threshold in the third cell corresponding to the third frequency.

3. The method according to claim 2, wherein the second cell comprises at least one of the following:
a fourth cell, wherein the fourth cell is a cell with signal quality greater than the third signal quality threshold in the third cell corresponding to the third frequency; or
a neighboring cell of a cell currently accessed by the electronic device, wherein the neighboring cell of the cell currently accessed by the electronic device comprises at least one of a cell within coverage of the first access network device or a cell within coverage of a second access network device, and network standards of the second access network device and the first access network device are different; or
a neighboring cell of the first cell; or
a cell historically accessed by the electronic device at a current location.

4. The method according to claim 3, wherein the first access network device is a new radio NR base station, and the second access network device is a long term evolution LTE base station.

5. The method according to claim 1, wherein the first access network device is a new radio NR base station, and the first standard is a long term evolution LTE standard.

6. The method according to claim 3, wherein the measuring signal quality of a second cell comprises:
sequentially measuring the signal quality of the second cell based on measurement priorities of the second cell in a case in which the second cell comprises at least two of the fourth cell, the neighboring cell of the cell currently accessed by the electronic device, the neighboring cell of the first cell, or the historically accessed cell, wherein
a measurement priority of the fourth cell is higher than a measurement priority of the neighboring cell of the cell currently accessed by the electronic device, the measurement priority of the neighboring cell of the cell currently accessed by the electronic device is higher than a measurement priority of the neighboring cell of the first cell, and the measurement priority of the neighboring cell of the first cell is higher than a measurement priority of the historically accessed cell.

7. The method according to claim 3, wherein the second frequency comprises at least one of the following:
a frequency corresponding to the fourth cell; or
a frequency corresponding to the neighboring cell of the cell currently accessed by the electronic device; or
a frequency corresponding to the neighboring cell of the first cell; or
a frequency corresponding to the cell historically accessed by the electronic device at the current location.

8. The method according to claim 7, wherein the measuring signal quality of a second cell comprises:
sequentially measuring the signal quality of the second cell based on measurement priorities of the second frequency in a case in which the second frequency comprises at least two of the frequency corresponding to the fourth cell, the frequency corresponding to the neighboring cell of the cell currently accessed by the electronic device, the frequency corresponding to the neighboring cell of the first cell, and the frequency corresponding to the cell historically accessed by the electronic device at the current location, wherein
a measurement priority of the frequency corresponding to the fourth cell is higher than a measurement priority of the frequency corresponding to the neighboring cell of the cell currently accessed by the electronic device, the measurement priority of the frequency corresponding to the neighboring cell of the cell currently accessed by the electronic device is higher than a measurement priority of the frequency corresponding to the neighboring cell of the first cell, and the measurement priority of the frequency corresponding to the neighboring cell of the first cell is higher than a measurement priority of the frequency corresponding to the historically accessed cell.

9. The method according to any one of claims 1 to 8, wherein before the measuring signal quality of a second cell corresponding to a second frequency, the method further comprises:
starting a timer, wherein timing duration of the timer is preset duration; and
the measuring signal quality of a second cell corresponding to a second frequency comprises: measuring the signal quality of the second cell corresponding to the second frequency within the preset duration.

10. The method according to claim 9, wherein in a case in which a plurality of cells with signal quality greater than the second signal quality threshold exist in the second cell, the target cell is a cell with best signal quality in the plurality of cells.

11. The method according to any one of claims 1 to 8, further comprising:
accessing the first cell in a case in which the signal quality of the second cell is less than the second signal quality threshold.

12. The method according to claim 9, wherein the preset duration is 2 seconds or 3 seconds.

13. An electronic device, comprising a processor and a memory configured to store instructions executable by the processor, wherein the processor, when configured to execute the instructions, causes the electronic device to implement the method according to any one of claims 1 to 12.

14. A computer-readable storage medium, storing computer program instructions, wherein the computer program instructions, when executed by an electronic device, cause the electronic device to implement the method according to any one of claims 1 to 12.

15. A chip, wherein when the chip is deployed inside a terminal, the chip is configured to control the terminal to implement the method according to any one of claims 1 to 12.
